**Europäisches Patentamt**

**European Patent Office**

**Office européen des brevets**

(19)

(11) Veröffentlichungsnummer: **0 163 985**
**B1**

(12) **EUROPÄISCHE PATENTSCHRIFT**

(45) Veröffentlichungstag der Patentschrift:
**10.08.88**

(21) Anmeldenummer: **85105809.9**

(22) Anmeldetag: **11.05.85**

(51) Int. Cl.⁴: **F 16 H 1/26,** F 16 H 55/17,
F 16 D 3/18

(54) Stirnradgetriebe.

(30) Priorität: **23.05.84 DE 3419194**

(43) Veröffentlichungstag der Anmeldung:
**11.12.85 Patentblatt 85/50**

(45) Bekanntmachung des Hinweises auf die Patenterteilung:
**10.08.88 Patentblatt 88/32**

(84) Benannte Vertragsstaaten:
**DE FR GB IT**

(56) Entgegenhaltungen:
**DE-A-2 103 190**
**FR-A-2 388 162**
**US-A-3 889 334**

(73) Patentinhaber: **RENK AKTIENGESELLSCHAFT,**
**Gögginger Strasse 71 - 83, D-8900 Augsburg (DE)**

(72) Erfinder: **Zaunberger, Franz Xaver, Zieglerstrasse**
**10, D-8900 Augsburg (DE)**
Erfinder: **Kugler, Artur, A.- Droste- Hülshoff-**
**Strasse 28, D-8900 Augsburg (DE)**

## Beschreibung

Die Erfindung betrifft ein Stirnradgetriebe gemäß dem Oberbegriff von Patentanspruch 1.

Ein solches Stirnradgetriebe ist aus der US-A-3 889 334 bekannt. Bei dem bekannten Stirnradgetriebe kann sich der Zahnkranzring radial und winkelbeweglich im Sinne eines Kräfteausgleichs einstellen. Bei Verlagerungen der Drehachsen der beiden Zahnräder, beispielsweise infolge von Gehäuseverformungen, in welchen die Drehachsen gelagert sind, können große Verschiebungen zwischen den Laufverzahnungen und zwischen den Kuppelverzahnungen auftreten. Dabei stellen sich die Kuppelverzahnungen relativ zueinander und die Laufverzahnungen relativ zueinander im Sinne eines Kräfteausgleiches in bestimmter Weise ein. Dabei kann es in der Laufverzahnung zu einer Einstellung kommen, bei welcher die Zähne der Laufverzahnungen nicht mehr optimal über die gesamte Länge und gesamte Höhe aneinander anliegen, sondern beispielsweise nur noch punktweise an einem Zahnende. Die Einstellung des Zahnkranzringes im Sinne eines Kräfteausgleiches bedeutet also nicht gleichzeitig auch ein optimales Tragbild in den Laufverzahnungen.

Aus der DE-A-2 103 190 ist ein Stirnradgetriebe bekannt, welches aus einer Zahnstange und einem damit in Eingriff befindlichen Zahnrad besteht. Das Zahnrad besteht aus einem Zahnkranzring, welcher über ein Kugelgelenk auf einer Welle sitzt und mit dieser über eine Kupplungsverzahnung in den Kugelflächen drehfest verbunden ist. Dadurch kann der Zahnkranz auf der Kugelfläche der Welle um einen Kugelmittelpunkt schwenken. Dieses Verschwenken ermöglicht eine Anpassung der Laufverzahnung des Zahnrades an die Zähne der Zahnstange, wenn die Zahnradwelle relativ zur Zahnstange Schwenkbewegungen ausführt. Diese Anpassung erfolgt automatisch im Sinne eines Kräfteausgleiches, da eine Kraft stets eine gleich große Gegenkraft hervorruft.

Bei den vorstehend erörterten bekannten Stirnradgetrieben kann es bei einer Kräfteausgleichseinstellung zu einer Einstellposition kommen, bei welcher die Zähne der Laufverzahnungen nicht mehr über die gesamte Länge und vorbestimmte gesamte Höhe aneinander anliegen, sondern nur noch punktweise an einem Zahnende. Die Einstellung des Zahnkranzringes im Sinne eines Kräfteausgleiches bedeutet also nicht auch gleichzeitig eine optimale Verteilung der Zahnkräfte über die gesamte Zahnlänge.

Durch die Erfindung soll die Aufgabe gelöst werden, ein Stirnradgetriebe in leichter Bauart zu entwickeln, welches geeignet ist, extrem hohe radiale Kräfte auf eine frei aus einem Gehäuse herausragende Abtriebswelle aufzunehmen, wobei die infolge der Leichtbauweise auftretenden Gehäuseverformungen und Wellendurchbiegungen keinen negativen Einfluß auf die Übertragungsfähigkeit der Zahnräder durch Verschränken der Zähne zur Folge haben. Allgemein ausgedrückt sollen durch die Erfindung Spannungen zwischen den Zähnen bei Achsfluchtungsabweichungen der Zahnradachsen vermieden werden.

Diese Aufgabe wird gemäß der Erfindung durch die kennzeichnenden Merkmale von Patentanspruch 1 in Kombination mit den Merkmalen des Oberbegriffes dieses Patentanspruches 1 gelöst.

Gemäß der Erfindung wird die Zahnform der Kuppelverzahnung so ausgebildet, daß die Trennkraft -radial gerichtete Kraftkomponenteder Laufverzahnung größer ist als die zentrierende Kraft der Kuppelverzahnung. Die zentrierende Kraft der Kuppelverzahnung ist die der Trennkraft entgegengesetzt gerichtete radiale Kraftkomponente. Dadurch wird erreicht, daß im Belastungszustand durch eine radiale Verlagerung des Zahnkranzringes gegenüber der Wellenmitte innerhalb des Zahnspieles in der Kuppelverzahnung die Umfangskraft nur von einem dem Eingriffspunkt der Laufverzahnung gegenüberliegenden Zahnsegmente übertragen wird und somit die erforderliche Kraft zum Einstellen des beweglich gelagerten Zahnrades auf die Verzahnung des fix gelagerten Zahnrades auf ein Minimum reduziert wird. Dabei ist die Kuppelverzahnung vorzugsweise so dimensioniert, daß durch elastische Verformung oder Durchbiegung der Zähne in dem kraftübertragenden Segmentbereich eine genügende Anzahl Zähne an der Drehmomentübertragung beteiligt sind.

Weitere Merkmale der Erfindung sind in den Unteransprüchen enthalten.

Mehrere Ausführungsformen der Erfindung werden im folgenden mit Bezug auf die Zeichnungen beschrieben. Darin zeigen:

Fig. 1 einen Ausschnitt eines Stirnradgetriebes nach der Erfindung, mit einem beweglich auf einer Abtriebswelle angeordneten Stirnrad,

Fig. 2 einen Ausschnitt, im Axialschnitt gesehen, einer weiteren Ausführungsform eines Stirnradgetriebes nach der Erfindung, bei welcher ein Zahnkranzring auf einer kugeligen Fläche gelagert ist, und

Fig. 3 einen abgebrochenen Axialschnitt einer anderen Ausführungsform nach der Erfindung mit einem innenverzahnten Antriebs-Zahnkranzring.

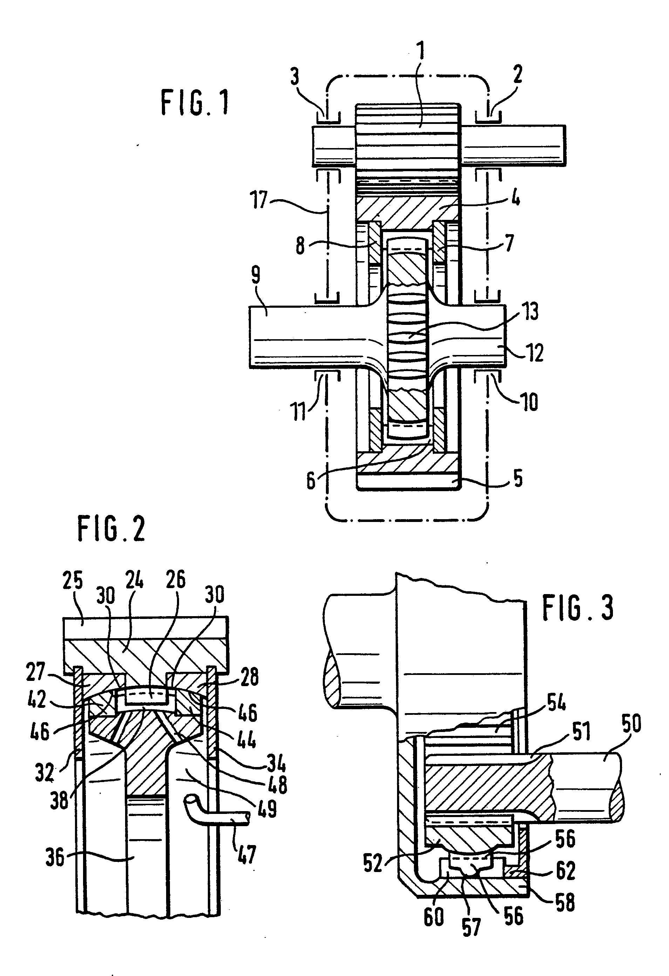

Das Stirnradgetriebe nach Fig. 1 enthält ein Antriebsritzel 1 mit Lagern 2 und 3, einen beweglichen Zahnkranzring 4 mit einer äußeren Laufverzahnung 5 und einer inneren Kuppelverzahnung 6, zwei beidseitig zu letzterer angeordnete, zur Aufrechterhaltung eines Ölringes dienende Dichtscheiben 7 und 8, eine Abtriebswelle 9 mit Lagern 10 und 11, sowie eine Radnabe 12 mit einer bogenförmigen Kuppelverzahnung 13 und ein Gehäuse 17.

Das Stirnradgetriebe nach Fig. 2 enthält einen Zahnkranzring 24 mit einer Laufverzahnung 25 und mit einer inneren Kuppelverzahnung 26, radseitige Führungsringe 27 und 28 mit einer konkaven Kugelfläche 30, zwei beidseitig der Führungsringe angeordnete Dichtscheiben 32 und 34, einen Radnabenkörper 36 mit einer bogenförmigen Kuppelverzahnung 38, zwei nabenseitige Führungsringe 42 und 44 mit konvexen Kugelflächen 46, die sich an den konkaven Kugelflächen 30 abstützen, eine Ölzuführung 47, und Öldurchgangsbohrungen 48 zur Kuppelverzahnung 26, 38. Der durch den Krümmungsmittelpunkt gehende Durchmesser der konkaven Kugelflächen 30 ist geringfügig größer als der durch den Krümmungsmittelpunkt gehende Durchmesser der konvexen Kugelflächen 46, damit sich der Zahnkranzring 24 mit den Führungsringen 27 geringfügig radial verlagern kann gegenüber dem Radnabenkörper 36 mit der Kuppelverzahnung 38. Zwischen Ölzuführung 47 und Bohrungen 48 ist ein Ölringraum 49.

Das Stirnradgetriebe von Fig. 3 mit innenverzahntem Antrieb enthält ein Antriebsritzel 50 mit einer Laufverzahnung 51, einen beweglichen Zahnkranzring 52 mit einer inneren Laufverzahnung 54 und mit einer äußeren Kuppelverzahnung 56, die durch bogenförmige Ansätze 57 an den Zahnspitzen außen zentriert ist, eine Hohlradnabe 58 mit einer inneren Kuppelverzahnung 60, und eine Dichtscheibe 62 zur Aufrechterhaltung eines Schmierölringes.

**Patentansprüche**

1. Hochleistungs-Stirnradgetriebe mit mindestens zwei miteinander in Eingriff stehenden Zahnrädern (1, 4; 24; 50, 52), von welchen mindestens ein Zahnrad (4; 24; 52) aus einem Zahnkranzring (4; 24; 52) mit einer Laufverzahnung (5; 25; 54) auf einer Umfangsfläche und einer ersten Kuppelverzahnung (6; 26; 56) auf einer dazu abgewandten Umfangsfläche besteht, mit einer Nabe (12; 36; 58), die auf einer Umfangsfläche eine zweite Kuppelverzahnung (13; 38; 60) aufweist, welche mit der ersten Kuppelverzahnung (6; 26; 56) des Zahnkranzringes (4; 24; 52) in Eingriff ist und eine winkelbewegliche Zahnkupplung bildet, und mit mindestens einer Stützfläche (Bogenzahnspitze; 30; 57) an der Nabe (12; 36; 58) und mindestens einer dieser radial gegenüberliegenden Stützfläche (Kuppelverzahnungsgrund; 46) am Zahnkranzring (4; 24; 52), von welchen mindestens eine der beiden Stützflächen, im Längsschnitt gesehen, bogenförmig verläuft, und von welchen die radial innenliegende Stützfläche einen so viel kleineren Durchmesser als die radial äußere Stützfläche hat, daß der Zahnkranzring (4; 24; 52) relativ zur Nabe (12; 36; 58) ein durch die Anlage der Stützflächen aufeinander begrenztes radiales Bewegungsspiel hat,

dadurch gekennzeichnet, daß die Eingriffswinkel der beiden Kuppelverzahnungen (6, 13; 26, 38; 56, 60) so dimensioniert sind, daß bei Belastung des Getriebes die die Verzahnung auseinander treibende Trennkraft in den miteinander in Eingriff befindlichen Laufverzahnungen (5; 25; 54) des Zahnkranzringes (4; 24; 52) und des anderen Zahnrades (1; 50) größer ist als in den beiden Kuppelverzahnungen (6, 13; 26, 38; 56, 60) und dadurch der Zahnkranzring (4; 24; 52) bis zur Anlage der beiden Stützflächen (Bogenzahnspitze, Kuppelverzahnungsgrund; 30, 46; 57) aneinander radial verschoben wird.

2. Stirnradgetriebe nach Anspruch 1, dadurch gekennzeichnet, daß die Stützflächen (30, 46) kugelausschnittförmig sind (Fig. 2)

3. Stirnradgetriebe nach Anspruch 1, dadurch gekennzeichnet, daß mindestens eine der beiden Stützflächen durch bogenförmige Zahnspitzen (57) von mindestens einer der beiden Kuppelverzahnungen (13; 56) gebildet ist (Fig. 1 und 3).

4. Stirnradgetriebe nach nach einem der Ansprüche 1 bis 3, dadurch gekennzeichnet, daß seitlich der Kuppelverzahnungen (6, 13; 26, 38; 56, 60) Dichtscheiben (7, 8; 32, 34; 62) angeordnet sind, die einen unter Fliehkrafteinwirkung stehenden Ölring während der Rotation der Zahnräder zur Schmierung der Kuppelverzahnung (6, 13; 2 6, 38; 56, 60) und deren Zentrierflächen halten.

**Claims**

1. Heavy-duty spur gear transmission comprising at least two spur wheels (1, 4; 24; 50, 52) in meshing engagement, at least one of said spur wheels (4; 24; 52) consisting of a toothed ring gear (4; 24; 52) with running gearteeth (5; 25; 54) on a first circumferential surface thereof and with first coupling gearteeth (6; 26; 56) on a circumferential surface separate from said first surface, a hub (12; 36; 58) which has on a circumferential surface thereof second coupling gearteeth (13; 38; 60) which are in engagement with said first coupling gearteeth (6; 26; 56) of the toothed ring gear (4; 24; 52) and constitute therewith an angularly movable toothed coupling, and at least one support surface (arcuate tooth tips; 30; 57) on the hub (12; 36; 58) and at least one support surface (coupling gearteeth roots; 46) on the toothed ring gear (4; 24; 52) and radially opposite said at least one support surface on the hub, wherein at least one of said at least one support surfaces on the hub and ring gear is arcuate viewed in longitudinal section, and wherein the radially inner support surface has a diameter which is so much smaller than that of the radially outer support surface that the toothed ring gear (4; 24; 52) is capable of radial play relative to the hub (12; 36; 58), said play being limited by the setting of the support surfaces against one another, characterised in that the angles of action of the first and second coupling gearteeth (6, 13; 26, 38; 56, 60) are so dimensioned that upon loading of the transmission the separating force tending to drive the gearteeth apart is greater between the running gearteeth (5; 25; 54) of the toothed ring gear (4; 24; 52) and the other spur wheel (1; 50) meshing therewith than between the first and second coupling gearteeth (6, 13; 26, 38; 56, 60), and thereby the toothed ring gear (4; 24; 52) is displaced radially until there is contact of the two support surfaces (arcuate tooth tips, coupling gearteeth roots; 30, 46; 57) with one another.

2. Spur gear transmission according to claim 1, characterised in that the support surfaces (30, 46) are part-spherical (Fig. 2).

3. Spur gear transmission according to claim 1, characterised in that at least one of the two support surfaces is constituted by arcuate tooth tips (57) of at least one of the two coupling gearteeth (13; 56) (Figs. 1 and 3).

4. Spur gear transmission according to one of claims 1 to 3, characterised in that sealing plates (7, 8; 32, 34; 62) are arranged to the side of the coupling gearteeth (6, 13; 26, 38; 56, 60), said sealing plates maintaining an oil ring under centrifugal force during the rotation of the spur gears in order to lubricate the coupling gearteeth (6, 13; 26, 38; 56, 60) and their centering faces.

**Revendications**

1. Transmission à engrenages droits à forte puissance comprenant au moins deux roues dentées engrenant l'une avec l'autre (1, 4; 24; 50, 52) dont l'une au moins (4; 24, 52) se compose d'une couronne dentée (4; 24; 52) avec une denture de roulement (5; 25; 54) sur une surface périphérique et d'une première denture d'accouplement (6; 26; 56) sur une surface périphérique opposée, un moyeu (12; 36, 58) qui présente sur une surface périphérique une seconde denture d'accouplement (13; 38; 60) qui engrène avec la première denture d'accouplement (6; 26; 56) de la couronne dentée (4; 24; 52) et qui constitue un accouplement à dents angulairement mobile, et au moins une surface d'appui (pointe de dent en arc; 30; 57) sur le moyeu (12; 36; 58) et au moins une surface d'appui qui lui est opposée dans le sens radial (fond de la denture d'accouplement; 46) sur la couronne dentée (4; 24; 52), l'une au moins des deux surfaces d'appui, vue en coupe longitudinale, s'étendant en forme d'arc, et la surface d'appui qui est située à l'intérieur dans le sens radial présentant un diamètre plus petit que la surface extérieure dans le sens radial d'une quantité telle que la couronne dentée (4; 24; 52) présente par rapport au moyeu (12; 36; 58) un jeu radial limité par la portée des surfaces d'appui l'une sur l'autre, <u>caractérisée par le fait</u> que les angles de pression des deux dentures d'accouplement (6, 13; 6, 38; 56, 60) sont dimensionnés de telle façon que, lorsque la transmission est en charge, la force d'écartement qui sépare les dentures l'une de l'autre soit plus élevée dans les dentures de roulement (5; 25; 54) de la couronne dentée (4; 24; 52) et de l'autre roue dentée (1; 50) engrenant l'une avec l'autre que dans les deux dentures d'accouplement (6, 13; 26, 38; 56, 60), et qu'ainsi la couronne dentée (4; 24; 52) soit déplacée radialement jusqu'à ce que les deux surfaces d'appui (pointes de dents en arc, fond de la denture d'accouplement; 30, 46; 57) viennent en portée l'une sur l'autre.

2. Transmission à engrenages droits selon la revendication 1, <u>caractérisée par le fait</u> que les surfaces d'appui (30, 46) présentent la forme de portions de sphères (Figure 2).

3. Transmission à engrenages droits selon la revendication 1, <u>caractérisée par le fait</u> qu'au moins l'une des deux surfaces d'appui est formée par des pointes de dents (57) en forme d'arcs d'au moins l'une des deux dentures d'accouplement (13; 56) (Figures 1 et 3).

4. Transmission à engrenages droits selon l'une des revendications 1 à 3, <u>caractérisée par le fait</u> que, latéralement par rapport aux dentures d'accouplement (6, 13; 26, 38; 56, 60), sont disposés des disques d'étanchéité (7, 8; 32, 34; 62) qui, pendant la rotation des roues dentées, maintiennent un anneau d'huile sous l'action de la force centrifuge pour lubrifier la denture d'accouplement (6, 13; 26, 38; 56, 60) et ses surfaces de centrage.

FIG. 1

FIG. 2

FIG. 3